Europäisches Patentamt

European Patent Office

Office européen des brevets

(11) Numéro de publication: **0 032 101**
**B1**

(12) **FASCICULE DE BREVET EUROPEEN**

(45) Date de publication du fascicule du brevet: **21.11.84**

(21) Numéro de dépôt: **80401885.1**

(22) Date de dépôt: **30.12.80**

(51) Int. Cl.³: **G 01 N 3/06,** G 01 L 1/06, G 01 B 5/30

(54) **Témoin de fatigue.**

(30) Priorité: **03.01.80 FR 8000342**
**31.07.80 FR 8017225**
**12.12.80 FR 8026727**

(43) Date de publication de la demande:
**15.07.81 Bulletin 81/28**

(45) Mention de la délivrance du brevet:
**21.11.84 Bulletin 84/47**

(84) Etats contractants désignés:
**AT BE CH DE GB IT LI LU NL SE**

(56) Documents cités:
**FR-A-2 113 391**
**US-A-2 920 480**
**US-A-3 979 949**
**US-A-4 107 980**
**US-A-4 164 874**

(73) Titulaire: **STAS SOCIETE TECHNIQUE D'ACCESSOIRES SPECIALISES Société anonyme dite:**
**77, rue Henri-Brisson**
**F-78500 Sartrouville (FR)**

(72) Inventeur: **Archer, Michel**
**55, Avenue des Gressets**
**F-78170 La Celle Saint-Cloud (FR)**

(74) Mandataire: **Boivin, Claude**
**9, rue Edouard-Charton**
**F-78000 Versailles (FR)**

Courier Press, Leamington Spa, England.

## Description

L'utilisation répétée d'un pièce mécanique fatigue celle-ci et cette pièce peut finir par se rompre alors qu'elle est soumise à un effort normal, la charge de travail ne dépassant pas la charge pour laquelle la pièce a été prévue.

Malheureusement, la fatigue d'une pièce n'est pas visible et il n'existe, à l'heure actuelle, aucun moyen simple pour déterminer l'état de fatigue, ce qui peut être la source d'accidents graves.

La présente invention a pour objet un témoin de fatigue qui peut être incorporé dans une pièce ou dans une structure soumise à des efforts répétés ou fixé sur cette pièce, et qui permet de connaître le moment où la piéce est fatiguée.

Le brevet FR—A—2 113 391 décrit une chaîne munie d'un indicateur de déformation. Celui-ci est constitué par un anneau qui est traversé par deux maillons de la chaîne et comporte un voile mince muni de zones d'affaiblissement. Mais cet indicateur, dans lequel les zones d'affaiblissement sont orientées perpendiculairement à la direction de l'effort de compression qui leur est appliqué, signale non pas la fatigue de la chaîne, mais la surcharge à laquelle cette chaîne est éventuellement soumise.

Le brevet US—A—4 164 874 décrit un témon de fatigue comportant deux éléments épais qui sont écartés l'un de l'autre et réunis l'un à l'autre par un voile mince muni de deux bords opposés et de deux fentes s'étendant chacune à partir d'un bord sur une certaine distance pour constituer chacune un fond de fente formant des points de départ de fissures, ces deux éléments étant incorporés à la pièce ou fixés à celle-ci de manière à se déplacer l'un par rapport à l'autre dans un plan qui est parallèle au plan du voile.

Lorsque la pièce se fatigue, une fissure se forme à partir de chacune des fentes. On peut mesurer la progression de la fissure, par exemple à l'aide d'une graduation gravée sur le témoin. Mais la fissure est peu visible, si bien que la lecture d'un tel témoin de fatigue nécessite des précautions particulières.

La présente invention a pour objet un témoin de fatigue du type ci-dessus, mais qui permet à un utilisateur de se rendre compte immédiatement qu'une pièce est fatiguée.

Ce témoin de fatigue est caractérisé en ce que les éléments épais sont disposés de manière à être écartés l'un de l'autre dans une direction sensiblement perpendiculaire à leur direction de déplacement relatif lorsque la pièce travaille, le voile mince étant ainsi soumis à un effort de cisaillement dans son plan, et en ce que les fentes du voile mince s'étendent dans ladite direction de déplacement relatif, de sorte que, lorsque la pièce travaille, des fissures apparaissent à partir des extrémités du fond de chacune des fentes, s'étendent progressivement dans le voile, et finissent par se rejoindre, la zone centrale du voile étant ainsi détachée.

La propagation des fissures dépend des déplacements qui sont imposés au témoin de fatigue par la pièce et, par conséquent, des efforts appliqués à la pièce. Ainsi, les fissures jouent le rôle d'une mémoire et enregistrent toutes les sollicitations auxquelles la pièce est soumise en service. Cette mémoire est sélective dans la mesure où un effort important provoque une progression de la fissure dans le voile plus rapide qu'un effort faible.

Les deux éléments massifs et le voile peuvent constituer une même pièce qui est percée d'un trou borgne sur chacune de ses deux faces opposées, les deux trous étant coaxiaux de sorte que leurs fonds soient séparés par le voile, et ayant des dimensions telles que ce voile soit le seul élément de liaison entre les deux parties non évidées de la pièce.

Le voile est avantageusement circulaire. Il peut être percé d'un trou en son centre. Le voile peut être plan ou bombé. Il peut comporter également des trous ou découpes supplémentaires permettant de guider les fissures. Il peut être relié à la partie épasse par un congé d'usinage. Il peut être d'épaisseur variable.

Le fond d'au moins l'une des fentes peut être plan ou convexe.

Des rainures peuvent être formées sur au moins une face du voile, à partir des extrémités du fond d'au moins l'une des fentes. Ces rainures constituent des zones d'affaiblissement de sorte que les fissures se forment au droit des rainures et ont ainsi une direction donnée. On peut également prévoir des entailles traversant le voile et partant des extrémités du fond de la fente. Ces entailles constituent des zones de concentration de contraintes afin de mieux contrôler l'initiation des fissures.

L'expérience montre que la fidélité du témoin de fatigue dépend très largement de la dimension de ces entailles et de la concentration de contraintes provoquée par lesdites entailles. Il y a, par suite, avantage à ce que la largeur de l'entaille soit quasiment nulle, le front avant de cette entaille étant de plus incliné par rapport au plan du voile.

Le voile peut être indépendant des éléments massifs auxquels il est fixé par exemple par des vis ou des boulons, par des axes rivetés ou par soudure.

L'une au moins des fentes peut être élargie au voisinage de son extrémité intérieure. Elle peut également avoir la forme d'un segment de cercle et déboucher à l'extérieur par une partie de longueur constant ou encore avoir la forme d'un secteur circulaire tronqué.

Les deux fentes peuvent être décalées l'une par rapport à l'autre, sur tout ou partie de leur longueur, par rapport à un axe parallèle à la direction de déplacement relatif des deux éléments épais.

L'angle du fond de chacune des fentes qui est soumis à une tension lorsque la pièce travaille, est avantageusement obtus alors que l'autre angle qui est soumis à une compression, est droit ou aigu.

L'expérience montre en effet que des fissures commencent à se former plus rapidement dans une pièce soumise à une traction que dans une pièce soumise à une compression. Comme, par ailleurs, des fissures se forment plus facilement à un angle aigu qu'à un angle obtus, on équilibre sensiblement la vitesse d'initiation des fissures aux deux angles de la fente.

Lorsque des fissures se sont formées dans le voile, à partir des angles de l'une des fentes, et ont fini par atteindre des fissures s'étendant à partir des angles de l'autre, il se peut que, par suite du frottement des bords des fissures, la partie détachée du voile ne s'en sépare pas matériellement et qu'ainsi la fatigue ne soit pas décelée.

Pour plus de sécurité, le fond d'au moins l'une des fentes peut porter une patte relevée en dehors du plan du voile et à laquelle est accrochée l'une des extrémités d'un ressort ayant son autre extrémité fixée au voile ou à la pièce dont la fatigue est à contrôler. Dans ces conditions, lorsque la pièce est fatiguée et que les fissures se sont suffisamment propagées, le ressort assure l'éjection de la partie détachée du voile ou tout au moins la déplace, ce qui permet de se rendre compte sans difficulté que la pièce est fatiguée.

Lorsque la pièce à contrôler présente une zone soumise à un champ de contraintes sensiblement uniforme et uniaxial, les deux éléments épais sont avantageusement fixés à la surface de la pièce dans une direction faisant un angle de 25° à 35° avec la direction de la contrainte principale.

Lorsque la pièce travaille, le déplacement relatif des deux parties du voile situées de part et d'autre de l'axe de la fente est pratiquement un glissement pur.

Il est ainsi possible d'obtenir un témoin de fatigue utilisable sur une pièce donnée sans qu'il soit nécessaire de modifier considérablement ladite pièce.

L'angle d'inclinaison optimal a pour valeur Arc tg$\sqrt{\mu}$, $\mu$ étant le coefficient de Poisson de la matière constituant le voile. Cet angle a pour valeur 29° dans le cas de l'acier, le coefficient de Poisson étant voisin de 0,3.

On a décrit ci-après, à titre d'exemples non limitatifs, divers modes de réalisation de l'invention avec référence aux dessins annexés dans lesquels:

La Figure 1 est une vue en élévation d'un témoin de fatigue;

La Figure 2 en est une vue en coupe suivant II—II de la Figure 1,

Les Figures 3 à 8 montrent des variantes du témoin de fatigue,

La Figure 9 montre un témoin de fatigue incorporé dans un anneau de levage,

La Figure 10 montre également un témoin de fatigue incorporé dans un anneau de levage,

La Figure 11 montre un témoin de fatigue incorporé dans un crochet,

La Figure 12 est une vue en coupe, à plus grande échelle, suivant XII—XII de la Figure 11,

La Figure 13 montre en élévation, à plus grande échelle, le voile du crochet et les fissures qui s'y forment,

La Figure 14 est une vue en élévation d'un autre mode de réalisation du témoin de fatigue,

Les Figures 15 et 16 sont des vues semblables à la Figure 14 de deux autres modes de réalisation,

La Figure 17 est une coupe transversale suivant XVII—XVII de la Figure 16,

Les Figures 18 à 20 sont des vues en élévation de trois autres modes de réalisation du témoin de fatigue,

La Figure 21 est une vue en élévation d'un voile indépendant,

La Figure 22 montre en élévation un anneau de levage muni d'un témoin de fatigue comportant le voile de la Figure 21.

La Figure 23 est une coupe transversale suivant XXIII—XXIII de la Figure 20,

La Figure 24 est un vue en élévation d'un autre mode de réalisation du témoin de fatigue,

La Figure 25 en est une vue en plan,

La Figure 26 en est une coupe suivant XXVI—XXVI de la Figure 24,

Les Figures 27 et 28 sont des vues semblables aux Figure 24 et 25 lorsque la pièce est fatiguée,

La Figure 29 est une vue en élévation d'un autre mode de réalisation de témoin de fatigue,

La Figure 30 est une vue suivant la flèche A de la Figure 29.

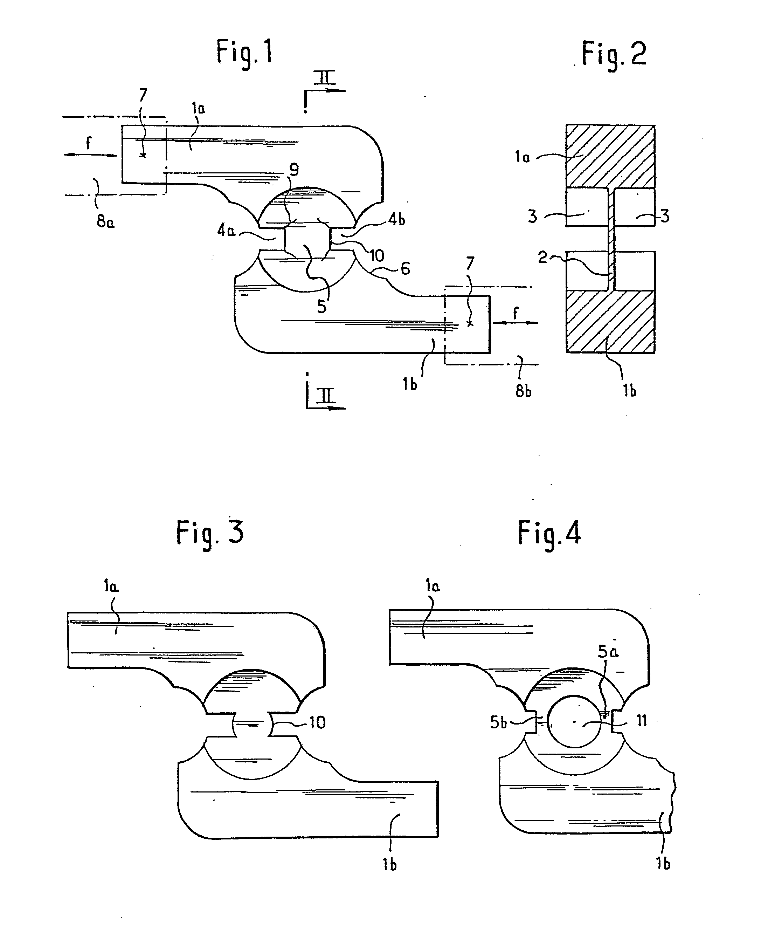

Tel qu'il est représenté à la Fig. 1, le témoin de fatigue selon l'invention comprend deux éléments allongés 1a et 1b, relativement épais, qui sont parallèles l'un à l'autre et réunis par un voile mince 2, faisant corps avec les éléments ou fixé à ceux-ci.

Ce voile s'étend transversalement par rapport à la direction des éléments 1a et 1b et est situé dans le plan médian longitudinal de ceux-ci. En d'autres termes, ou trou borgne 3 est ménagé sur chaque face latérale de l'ensemble des éléments 1a et 1b, les fonds des deux trous étant séparés l'un de l'autre par le voile 2. Dans l'exemple représenté, ces fonds sont plans de sorte que le voile est délimité par deux faces planes parallèles, mais ils pourraient être bombés.

Le voile 2 est circulaire. Il est muni, dans la direction de son diamètre parallèle à la direction des éléments 1a et 1b de deux fentes 4a et 4b qui débouchent à l'extérieur et entre lesquelles se trouve une partie pleine 5 assurant la liaison des deux éléments 1a et 1b. Ces éléments s'étendent jusqu'aux extrémités des fentes 4a et 4b par l'intermédiaire de bords concaves 6.

Les deux éléments 1a et 1b sont fixés, de

préférence à leurs extrémités libres, comme indiqué en 7, à deux parties 8a et 8b d'une même pièce, qui se déplacent l'une par rapport à l'autre sensiblement dans la direction des éléments 1a et 1b, lorsque la pièce travaille, comme cela est schématisé par les flèches f; ils peuvent également faire corps avec deux portions de la pièce. La direction du déplacement relatif des parties 8a et 8b est sensiblement parallèle au voile 2.

Lors de l'utilisation de la pièce, les deux éléments 1a et 1b du témoin de fatigue se déplacent par suite l'un par rapport à l'autre dans la direction des flèches, en exerçant un effort de cisaillement sur le voile 2, au droit de la partie 5 de ce voile. Quand la pièce a subi un certain nombre de cycles de travail, la partie 5 du voile se fissure comme indiqué en 9. Ces fissures partent du fond des fentes 4a et 4b et entourent progressivement cette partie 5, de sorte que celle-ci finit par se détacher d'elle-même au bout d'un certain nombre de cycles, ce qui signale que la pièce est fatiguée et doit être mise au rebut.

Dans ce qui précède, il a été indiqué que les éléments 1a et 1b étaient allongés. Mais cela n'est pas nécessiare et ces éléments pourraient être limités à leur partie se trouvant au droit du voile 5 en étant fixés aux parties 8a et 8b de la pièce à contrôler, par exemple en des points situés au droit de la partie 5 du voile.

Les fonds 10 des fentes 4a et 4b peuvent être plans, comme représenté à la Figure 1. Ils peuvent également être convexes comme on le voit à la Figure 3.

Il est avantageux que les fentes 4a et 4b se terminent par des angles aigus qui permettent, grâce aux concentrations de contraintes qui en résultent, de s'assurer du point de départ des fissures.

Un trou 11 peut éventuellement être prévu au centre de la partie 5, comme on le voit à la Figure 4. Dans ce cas, l'une et/ou l'autre des parties 5a et 5b comprises entre le fond des fentes et le trou se détache lorsque la pièce est fatiguée.

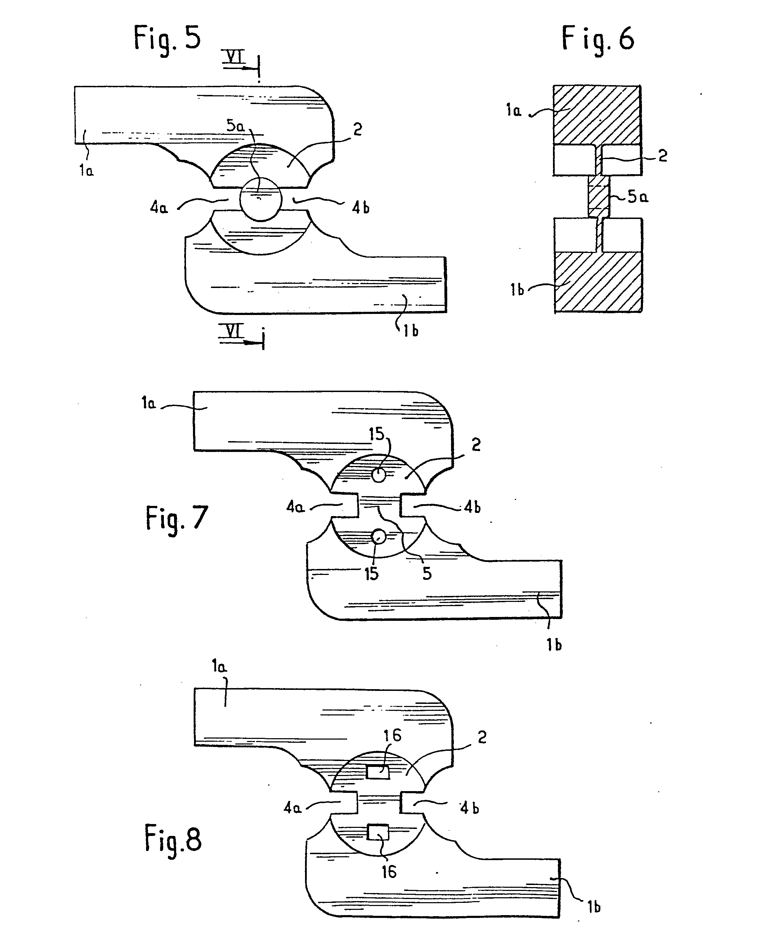

Le voile peut être d'épaisseur variable. En particulier, il peut, comme indiqué aux Figures 5 et 6 être renforcé en sen centre 5a de façon à concentrer encore plus les contraintes sur la partie mince adjacente.

Une découpe supplémentaire peut être aménagée dans le voile de façon à mieux guider la propagation des fissures. Cette découpe supplémentaire peut avoir la forme de deux trous circulaires 15 comme à la Figure 7, ou de deux trous rectangulaires 16 comme à la Figure 8. Aux Figures 7 et 8, les trous 15 et 16 sont disposés suivant un diamètre perpendiculaire à celui des fentes 4a et 4b.

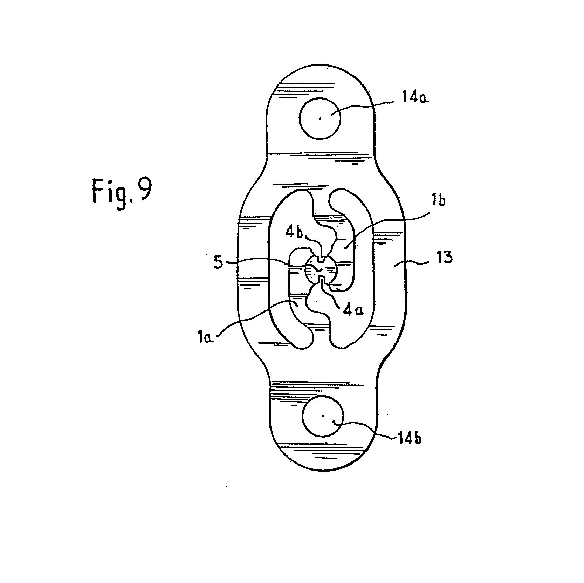

Le témoin de fatigue peut être incorporé à la pièce à contrôler au lieu d'être fixé à celle-ci. On voit ainsi à la Figure 9, un anneau allongé 13 muni à ses extrémités de deux points d'amarrage 14a et 14b. Le témoin de fatigue est disposé à l'intérieur de l'anneau, ses éléments 1a et 1b qui sont orientés suivant la direction longitudinale de l'anneau se raccordent au contour intérieur de cet anneau. Lorsque l'anneau est mis en tension, par l'intermédiaire des points d'amarrage 14a et 14b (ou en compression), les deux éléments épais 1a et 1b s'éloignent (ou se rapprochent). Les fentes 4a et 4b sont orientées suivant la direction longitudinale de l'anneau et disposées dans le plan médian de celui-ci; la partie 5 du témoin est ainsi soumise à un effort de cisaillement lorsque'une traction ou une compression est exercée, aux deux points 14a et 14b de l'anneau.

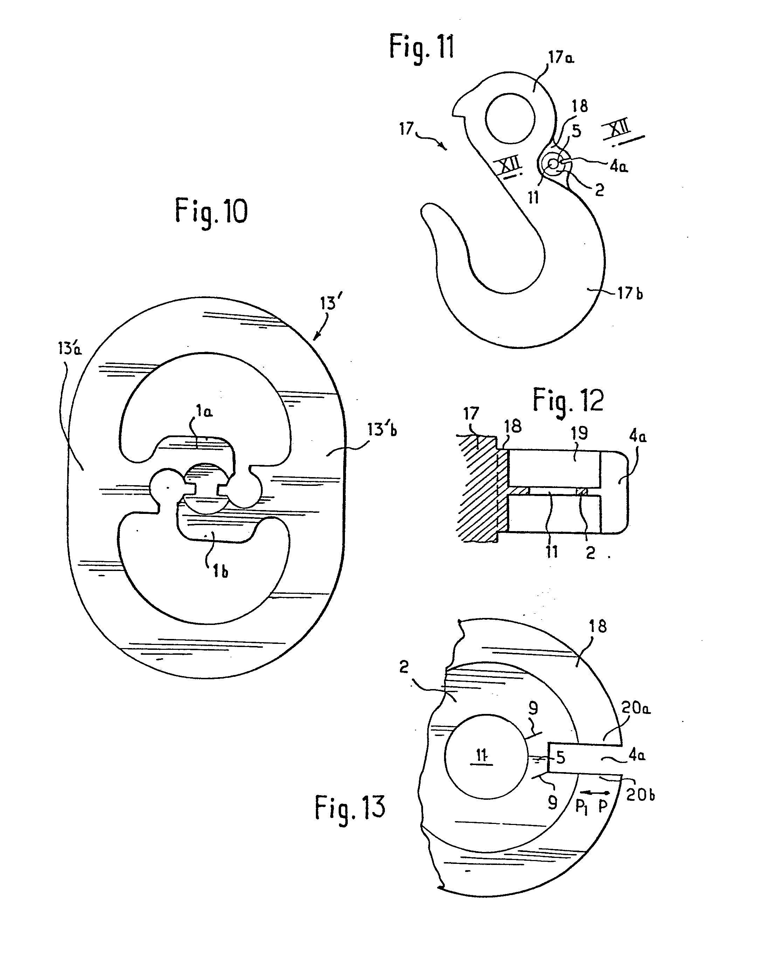

La Figure 10 représente également un anneau 13' muni d'un témoin de fatigue, mais le témoin est disposé perpendiculairement à la direction de la traction (ou de la compression) c'est-à-dire que ses éléments 1a et 1b sont orientés transversalement par rapport à l'anneau.

Lorsque l'anneau est mis sous tension (ou en compression), il se déforme et ses deux branches 13'a et 13'b se rapprochent ou s'éloignent, en entraînant dans leur mouvement les parties épasses 1a et 1b du témoin de fatigue et leur imposant un mouvement de cisaillement.

Le témoin de fatigue peut être incorporé à un crochet 17 (Figure 11 à 13). Ce crochet 17 comporte un bossage 18, sur sa face extérieure, à sa jonction entre son oeuil 17a et son corps 17b. Dans ce bossage est ménagé un trou 19 traversé sensiblement en son milieu par un voile 2 qui est percé en son centre d'unt rou 11 et est solidaire du bossage. Dans le bossage 18 est ménagée une fente 4a qui s'étend dans le voile 2, sensiblement dans le plan médian du bossage 18. La position de cette fente et son orientation par rapport au bossage permettent d'obtenir un déplacement relatif des deux parois de la fente sensiblement parallèle aux dites parois.

Dans un mode de réalisation particulier de l'invention, qui a donné toute satisfaction, le voile avait une épaisseur de 1 mm et son trou central un rayon de 3,5 mm; la fente avait une épaisseur de 1,6 mm et s'étendait dans le voile jusqu'à 1,5 mm du bord du trou 11. Ces dimensions correspondent à un crochet de force deux tonnes de longueur hors tout 162,5 mm, d'épaisseur 14 mm, dont le diamètre de 1 oeil est 30 mm et le diamètre du siège 45 mm.

Lors de l'utilisation du crochet, celui-ci tend à s'ouvrir, ce qui déforme le bossage 18 et le voile 2; les deux portions longitudinales 20a et 20b de la fente se déplacent sensiblement parallèlement l'une à l'autre, un point P de la portion 20b venant en $P_1$ si l'on suppose la portion 20a fixe. Quand le crochet a subi un certain nombre de cycles de chargement, la partie 5 du voile 2, qui se trouve dans le prolongement de la fente 4a, se fissure en 9. Ces fissures 9 entourent progressivement ladite partie 5 de telle sorte que celle-ci finit par se détacher d'elle-même au bout d'un certain nombre de cycles. Ce nombre de cycles dépend lui-même de la position du trou 11 et du voile 2 par rapport au crochet et au bossage, de l'épaisseur du voile, de la largeur et de la profondeur de la fente.

On notera que le voile 2 est placé à un endroit où il ne gêne pas le fonctionnement du crochet et qu'il est protégé des chocs et de l'abrasion. Le bossage 18 n'existant normalement pas dans ce crochet, la fissure ou la rupture du voile n'affaiblissent pas le crochet.

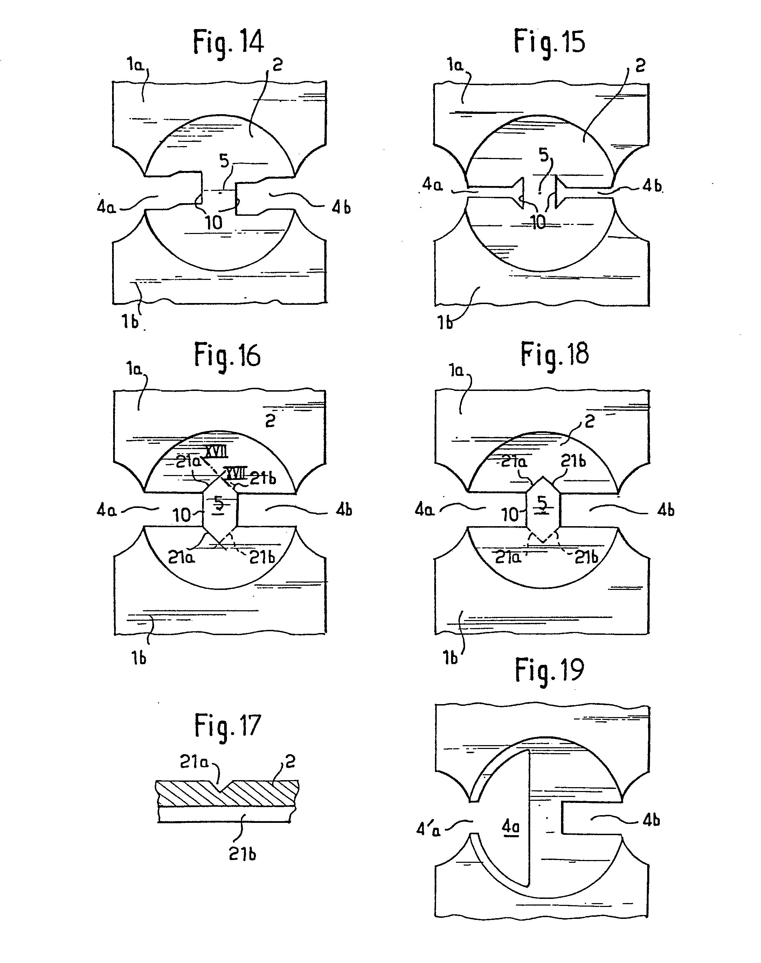

Les fentes 4a et 4b, au lieu d'être disposées dans un même axe passant par le centre du voile 2, peuvent être décalées l'une par rapport à l'autre, partiellement ou totalement. C'est ainsi que, dans le mode de réalisation de la Figure 14, les parties extérieures des fentes sont disposées dans un même axe alors que leurs fonds 10 sont décalés l'un par rapport à l'autre, de part et d'autre de cet axe.

La largeur des fentes 4a et 4b peut ne pas être la même sur toute la longueur des fentes. A la Figure 15, les fentes 4a et 4b sont élargies, au voisinage de leur fond 10.

Des rainures 21a et 21b peuvent être formées dans la partie centrale 5 du voile, à partir des extrémités des fonds des fentes 4a et 4b. Dans le mode de réalisation des Figures 16 et 17, les rainures 21a qui partent des extrémités du fond 10 de la fente 4a sont ménagées sur l'une des faces du voile alors que les rainures 21b qui partent des extrémités du fond 10 de la fente 4b sont ménagées sur la face opposée du voile.

Dans le mode de réalisation de la Figure 18, les rainures 21a sont ménagées l'une sur l'une des faces du voile et l'autre sur son autre face. Il en est de même pour les rainures 21b, les deux rainures 21a et 21b qui sont ménagées sur la même face du voile, s'étendant depuis les extrémités des fonds 10 situées du même côté par rapport à l'axe des fentes.

Dans le mode de réalisation de la Figure 19, les fentes 4a et 4b sont différentes. La fente 4b a une largeur constante, alors que la fente 4a est en forme de segment de cercle et débouche à l'extérieur par une partie 4'a de largeur approximativement égale à celle de la fente 4b.

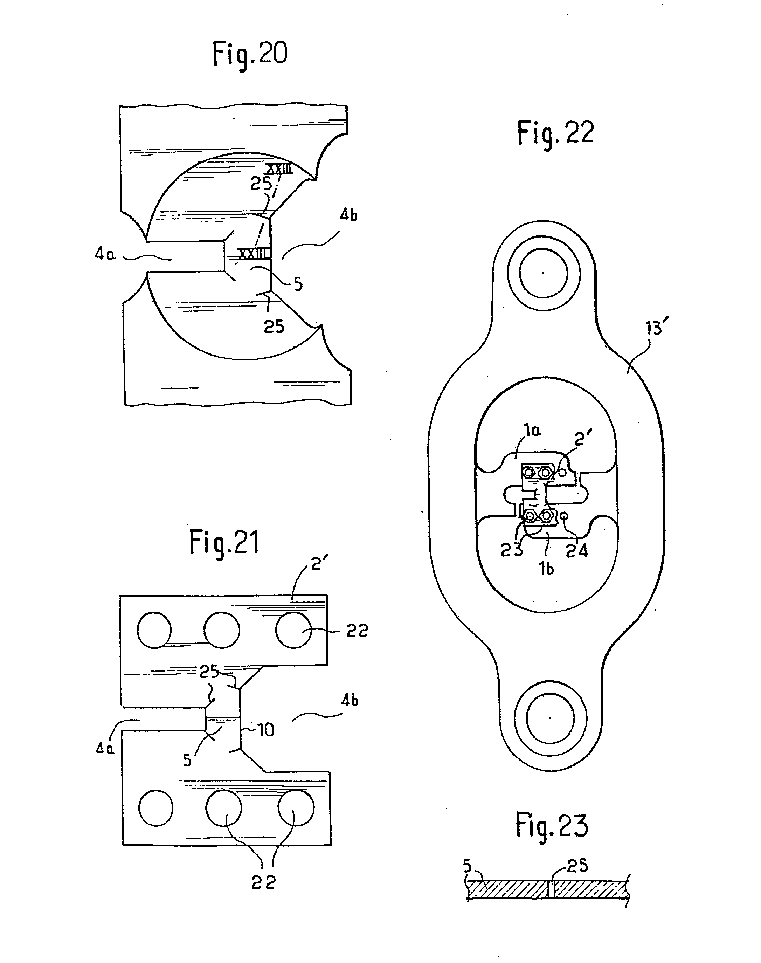

Dans le mode de réalisation des Figures 20 et 23, les fentes 4a et 4b sont encore différentes. La fente 4a a une largeur constante alors que la fente 4b est en forme de secteur tronqué. Le voile 2 comporte, sur l'une de ses faces, des entailles 25 qui partent des extrémités des fonds 10 des fentes 4a et 4b. Ces entailles sonttusinées par tout procédé permettant de les réaliser aussi fines que possible, tel que électroérosion, électroérosion par fil, découpe par laser, découpe par faisceau d'électrons.

La Figure 21 montre un témoin de fatigue dans lequel le voile mince 2' est indépendant des éléments épais et peut être fixé à ceux-ci par des boulons traversant des trous 22 prévus dans le voile. Ce type de témoin de fatigue, réalisé à partir d'un voile indépendant, peut être associé à toutes les formes possible de la partie centrale 5 et des fentes 4a et 4b qui ont été décrites précédemment. Dans le mode de réalisation particulier de la Figure 21, les fentes 4a et 4b ont des largeurs constantes, mais différentes. Ce voile 2' comporte sur l'une de ses faces, des entailles 25 qui partent des extrémités des fonds 10 des fentes 4a et 4b.

La Figure 22 montre un voile mince 2' fixé sur un anneau semblable à celui représenté à la Figure 10. Ce voile est fixé sur la partie 1a et 1b de l'anneau par des vis 23, qui traversent les trous 22 du voile et sont vissées dans des trous taraudés 24 des dites parties 1a et 1b, ou par tout autre moyen, par exemple par soudure électrique par points, par soudure ou laser par soudure à l'aide d'un faisceau d'électrons.

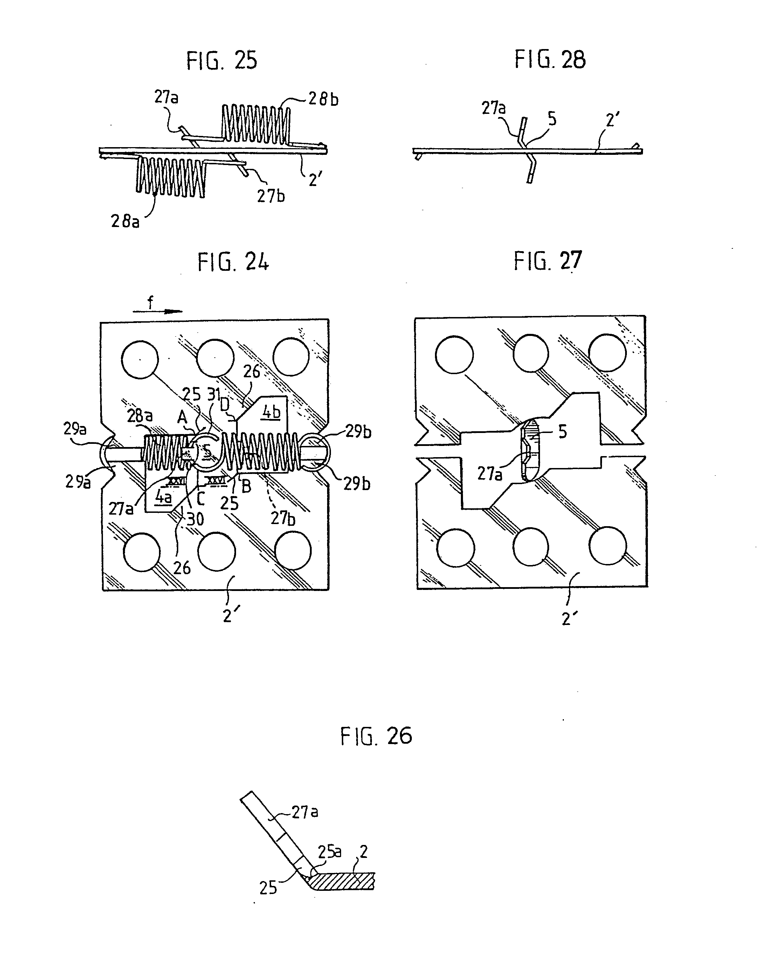

A la Figure 24, on voit un témoin de fatigue qui est du même type que celui représenté à la Figure 21, c'est-à-dire qu'il comprend un voile mince 2' destiné à être fixé à des parties épaisses de la pièce dont la fatigue est à surveiller. Cette fixation est effectuée de manière que, lorsque la pièce travaille, la partie du voile, qui est la partie supérieure à la Figure 24, se déplace de gauche à droite à cette figure, comme indiqué par la flèche f.

Le fond de la fente 4a de gauche est biseauté à son bord inférieur comme indiqué en 26, alors que le fond de la fente 4b comporte un biseau analogue à son bord supérieur. Lorsque la pièce travaille, des fissures tendent à se produire aux angles A et B qui sont comprimés et aux angles C et D qui sont tendus. Grâce aux biseaux 26, les angles en C et D sont obtus, ce qui ralentit la formation des fissures et contrebalance le fait que les fissures commencent et se propagent plus facilement aux angles tendus qu'aux angles comprimés. La formation des fissures est mieux équilibrée et les fissures commencent à se former pratiquement simultanément aux quatre angles A, B, C, D des deux fentes 4a et 4b. Si on le désire, on peut former des entailles 25 qui partent des angles A, B, C et D et sont dirigés vers l'extérieur des fentes, obliquement pour les entailles qui s'étendent depuis les angles obtus A et B, parallèlement pour les entailles qui s'étendent depuis les angles C et D.

Le fond de chacune des fentes 4a et 4b comporte une patte 27a ou 27b qui est relevée à l'extérieur du plan du voile mince 2', l'une d'un côté de ce plan et l'autre du côté opposé. Chacune de ces pattes est destinée à l'accrochage de l'une des extrémités d'un ressort 28a ou 28b. L'autre extrémité du ressort peut être fixée à la pièce dont la fatigue est à contrôler. Mais, dans l'exemple de réalisation représenté, elle est fixée, à deux becs 29a ou 29b qui font saillie vers l'intérieur des fentes 4a et 4b.

Les ressorts 28a et 28b exercent un couple sur la partie centrale 5 se trouvant entre les fentes 4a et 4b. Quand la pièce est fatiguée et que les fissures partant des angles A, B, C, et D, ou des entailles 25 si celles-ci sont prévues, sont sur le point de se rencontrer deux à deux, ce couple fait pivoter la partie centrale 5, comme le montrent les Figures 27 et 28. Si la matière du voile est peu ductile, il y a rupture aux extrémités des fissures et la partie centrale 5 est éjectée automatiquement. Si la matière est plus ductile, il se peut que la partie 5 reste dans la position des Figures 27 et 28, mais son pivotement indique que la pièce est fatiguée.

Comme on le voit plus particulièrement à la Figure 24, chacune des pattes 27a et 27b comporte un épaulement 30 qui sert d'appui à une boucle d'accrochage 31 du ressort. Celui-ci a ainsi une position déterminée sur la patte, de sorte que le couple, qui tend à faire pivoter la partie centrale 5, a une valeur précise.

Comme on le voit plus particulièrement à la Figure 26, le front avant 25a de l'entaille 25 a la forme d'un biseau incliné par rapport au plan du voile, grâce au relevage de la patte 27a. Ce biseau facilite l'initiation de la fissure à partir de l'entaille.

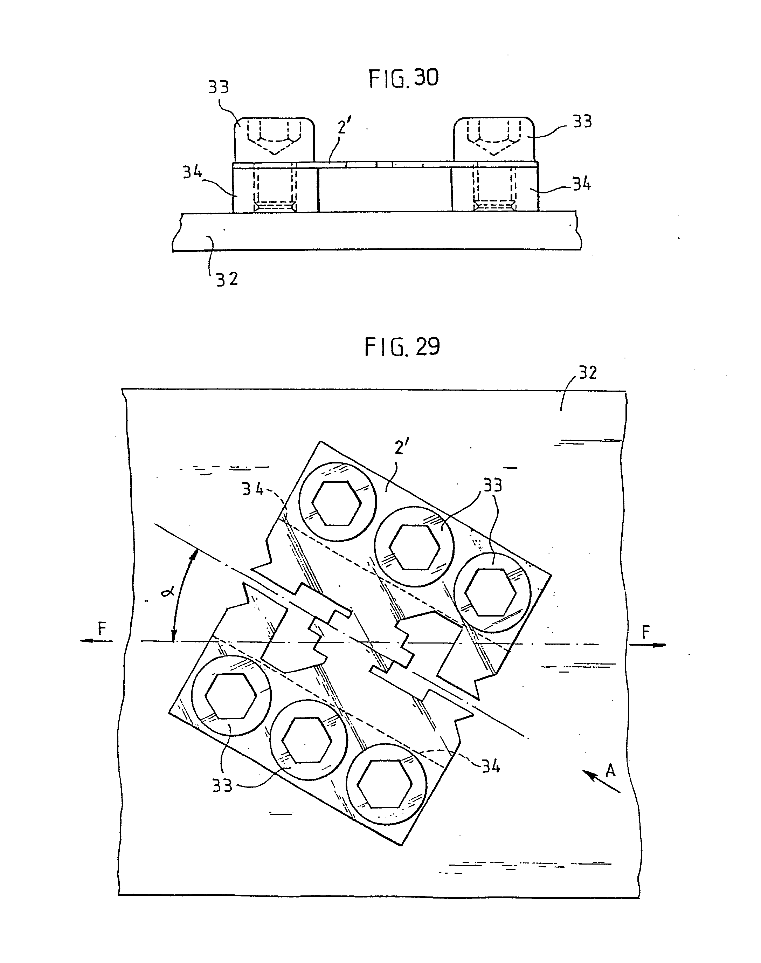

Dans le mode de réalisation des Figures 29 et 30, le témoin de fatigue comprend un voile 2' qui est analogue à celui représenté à la Figure 1 et est fixé sur la pièce 32 à surveiller par des boulons 33, avec interposition de cales 34 qui constituent les éléments épais du témoin de fatigue. Cette fixation est réalisée de façon que les deux cales 34 et les fentes 4a et 4b fassent un angle $\alpha$ de l'ordre de 29° avec la direction F de la contrainte principale à laquelle est soumise la pièce 32.

Dans ces conditions, le déplacement des deux parties du voile 2' situées de part et d'autre de l'axe des fentes 4a et 4b, est pratiquement un glissement pur.

Il va de soi que la présente invention ne doit pas être considérée comme limitée aux modes de réalisation décrits et représentés, mais en couvre, au contraire, toutes les variantes.

## Revendications

1. Témoin de fatigue pour pièce mécanique soumise à des efforts répétés, comportant deux éléments épais (1a et 1b), qui sont écartés l'une de l'autre et réunis l'un à l'autre par un voile mince (2) muni de deux bords libres et opposés et de deux fentes (4a et 4b) s'étendant chacune à partir d'un bord sur une certaine distance pour constituer chacun un fond de fente formant des points de départ de fissures, ces deux éléments étant incorporés à la pièce ou fixés à celle-ci de manière à se déplacer l'un par rapport à l'autre dans un plan qui est parallèle au plan du voile, caractérisé en ce que les éléments épais (1a et 1b) sont disposés de manière à être écartés l'un de l'autre dans une direction sensiblement perpendiculaire à leur direction de déplacement relatif lorsque la pièce travaille, le voile mince (2) étant ainsi soumis à un effort de cisaillement dans son plan, et en ce que les fentes (4a et 4b) du voile mince (2) s'étendent dans ladite direction de déplacement relatif, de sorte que, lorsque la pièce travaille, deux fissures (9) apparaissent à partir des extrémités du fond de chacune des fentes, s'étendent progressivement dans le voile et finissent par se rejoindre, la zone centrale (5) du voile (2) étant ainsi détachée.

2. Témoin selon la revendication 1, caractérisé en ce que les deux éléments épais (1a et 1b) et le voile (2) constituent une même pièce qui est percée d'un trou borgne (3) sur chacune de ses deux faces latérales opposées, les deux trous (3) étant coaxiaux de sorte que leurs fonds soient séparés par le voile (2), et ayant des dimensions telles que ce voile soit le seul élément de liaison entre les deux parties non évidées de la pièce.

3. Témoin selon la revendication 1 ou 2, caractérisé en ce que le voile (2) est circulaire, éventuellement muni d'un trou (11) en son centre.

4. Témoin selon l'une des revendications 1 à 3, caractérisé en ce que les fentes (4a et 4b) sont opposées l'une à l'autre dans la direction du déplacement relatif de deux éléments épais.

5. Témoin selon l'une quelconque des revendications précédentes, caractérisé en ce que le fond (10) d'au moins l'une des fentes est plan.

6. Témoin selon l'une quelconque des revendications 1 à 4, caractérisé en ce que le fond (10) d'au moins l'une des fentes est convexe.

7. Témoin selon l'une quelconque des revendications précédentes, caractérisé en ce que le voile (2) est bombé.

8. Témoin selon l'une quelconque des revendications précédentes, caractérisé en ce qu'un conge d'usinage relie le voile (2) aux parties épaisses (1a et 1b).

9. Témoin selon l'une quelconque des revendications précédentes, caractérisé en ce que le voile (2), d'épaisseur variable, est plus épais en son centre.

10. Témoin selon l'une quelconque des revendications précédentes, caractérisé en ce que des découpes supplémentaires (15 ou 16) sont ménagées dans le voile (2) pour guider les fissures, ces découpes étant par exemple circulaires ou rectangulaires.

11. Témoin de fatigue selon l'une des revendications 1 à 10, caractérisé en ce que des rainures (21a-21b) sont formées, sur au moins une face du voile (2), à partir des extrémités du fond de l'une au moins des fentes (4a et 4b).

12. Témoin selon l'une des revendications 1 à 11, caractérisé en ce que le voile (2') est indépendant des éléments massifs (1a ou 1b) auxquels il est fixé par exemple par des vis ou des boulons (23).

13. Témoin de fatigue selon l'une des revendications précédentes, caractérisé en ce que l'une au moins des fentes (4a ou 4b) est élargie au voisinage de son extrémité intérieure.

14. Témoin de fatigue selon l'une des revendications 1 à 13, caractérisé en ce que l'une des fentes (4a) a la forme d'un segment de cercle et débouche à l'extérieur par une partie (4'a) de largeur constante, ou encore a la forme d'un secteur circulaire tronqué.

15. Témoin de fatigue selon l'une des revendications 1 à 14, caractérisé en ce que les deux fentes (4a et 4b) sont décalées l'une par rapport à l'autre, sur tout ou partie de leur longueur par rapport à un axe parallèle à la direction de déplacement relatif des deux éléments épais.

16. Témoin de fatigue selon l'une des revendications 1 à 15, caractérisé en ce que les deux fentes (4a et 4b) sont de forme différente.

17. Témoin de fatigue selon l'une des revendications 1 à 16, caractérisé en ce que des entailles (25) sont ménagées dans le voile (2), à partir du fond d'au moins l'une des fentes (4a et 4b).

18. Témoin de fatigue selon l'une des revendications 1 à 17, caractérisé en ce que l'angle C ou D du fond d'au moins l'une des fentes (4a et 4b) qui est soumis à une tension lorsque la pièce travaille, est obtus, alors que l'autre angle A ou B qui est soumis à une compression, est droit ou aigu.

19. Témoin de fatigue selon l'une des revendications 1 à 18, caractérisé en ce que le fond d'au moins l'une des fentes (4a et 4b) porte une patte (27a ou 27b) relevée en dehors du plan du voile et à laquelle est accrochée l'une des extrémités d'un ressort (28a ou 28b) ayant son autre extrémité fixée au voile ou à la pièce dont la fatigue est à contrôler.

20. Témoin de fatigue selon la revendication 19, caractérisé en ce que la patte (27a ou 27b) porte un épaulement (30) formant butée pour le ressort et déterminant sa position par rapport au plan du voile.

21. Témoin de fatigue selon l'une des revendications 1 à 20, caractérisé en ce que, lorsque la pièce à contrôler présente une zone soumise à un champ de contraintes sensiblement uniforme et uni-axial, les deux éléments épais du témoin de fatigue sont fixés à la surface de la pièce dans une direction faisant un angle de 25° à 35° avec la direction de la contrainte principale.

22. Témoin de fatigue selon la revendication 17, caractérisé en ce que le front avant (25a) des entailles est biseauté et incliné par rapport au plan du voile.

**Patentansprüche**

1. Vorrichtung zum Anzeigen von Materialermüdung eines wiederholten Beanspruchungen ausgesetzten mechanischen Bauteils, mit zwei dicken Teilen (1a und 1b), welche einen Abstand voneinander aufweisen und miteinander durch eine dünne, mit zwei freien, einander gegenüberliegenden Rändern und zwei Öffnungen (4a und 4b) versehene Wand (2) verbunden sind, die sich jeweils von einem Rand über eine bestimmte Länge erstrecken, so daß je ein Öffnungsboden gebildet wird, der Ausgangsstellen für Risse entstehen läßt, wobei die beiden Teile im Bauteil aufgenommen oder an ihm befestigt sind, dergestalt, daß sie sich gegeneinander in einer zur Ebene der Wand parallelen Ebene bewegen können, dadurch gekennzeichnet, daß die beiden dicken Teile (1a und 1b) in der Weise angeordnet sind, daß sie voneinander in einer Richtung entfernt sind, die annähernd senkrecht zu der Richtung ihrer relativen Bewegung während der Beanspruchung des Bauteils verläuft, wobei die dünne Wand (2) in ihrer Ebene einer Scherbeanspruchung unterworfen wird, und dadurch, daß die Öffnungen (4a und 4b) der dünnen Wand (2) sich in der Richtung dieser relativen Bewegung erstrecken, so daß während der Beanspruchung des Bauteils, ausgehend von den Enden des Bodens jeder Öffnung, zwei Risse (9) erscheinen, sich in der Wand fortlaufend ausbreiten und schließlich wieder schließen, wobei sich der Mittelbereich (5) der Wand (2) auf diese Weise ablöst.

2. Vorrichtung nach Anspruch 1, dadurch gekennzeichnet, daß die beiden dicken Teile (1a und 1b) und die Wand (2) als ein Stück ausgebildet sind, in dem auf jeder seiner beiden gegenüberliegenden Seiten ein Sackloch (3) eingearbeitet ist, wobei die beiden Löcher (3) koaxial angeordnet sind, so daß ihre Böden durch die Wand (2) getrennt sind, und solche Abmessungen aufweisen, daß die Wand die einzige Verbindung zwischen den beiden nicht ausgesparten Teilen des Stückes darstellt.

3. Vorrichtung nach Anspruch 1 oder 2, dadurch gekennzeichnet, daß die Wand (2) kreisförmig ausgebildet und ggf. mit einem Loch (11) in seiner Mitte versehen ist.

4. Vorrichtung nach einem der Ansprüch 1 bis 3, dadurch gekennzeichnet, daß die beiden Öffnungen (4a und 4b) in der Richtung der relativen Bewegungen der beiden dicken Teile einander gegenüberliegen.

5. Vorrichtung nach einem der vorhergehenden Ansprüche, dadurch gekennzeichnet, daß der Boden (10) wenigstens einer der beiden Öffnungen eben ausgebildet ist.

6. Vorrichtung nach einem der Ansprüche 1 bis 4, dadurch gekennzeichnet, daß der Boden (10) wenigstens einer der Öffnungen konvex ausgebildet ist.

7. Vorrichtung nach einem der vorhergehenden Ansprüche, dadurch gekennzeichnet, daß die Wand (2) gewölbt ausgebildet ist.

8. Vorrichtung nach einem der vorhergehenden Ansprüche, dadurch gekennzeichnet, daß eine Bearbeitungshohlkehle die Wand (2) mit den dicken Teilen (1a und 1b) verbindet.

9. Vorrichtung nach einem der vorhergehenden Ansprüche, dadurch gekennzeichnet, daß die unterschiedlich starke Wand (2) in ihrer Mitte dicker ausgebildet ist.

10. Vorrichtung nach einem der vorhergehenden Ansprüche, dadurch gekennzeichnet, daß zusätzliche Ausschnitte (15 oder 16) in der Wand (2) angebracht sind, um die Risse zu leiten, wobei die Ausschnitte beispielsweise kreisförmig oder rechteckig ausgebildet sind.

11. Vorrichtung nach einem der Ansprüche 1 bis 10, dadurch gekennzeichnet, daß Einkerbungen (21a-21b) auf wenigstens einer Seite der Wand (2) ausgebildet sind, die von den Enden des Bodens wenigstens einer der Öffnungen (4a und 4b) ausgehen.

12. Vorrichtung nach einem der Ansprüche 1 bis 11, dadurch gekennzeichnet, daß die Wand (2') ein selbstständiges, von den starken Teilen (1a oder 1b) unabhängiges Teil ist, an denen sie beispielsweise durch Schrauben oder Bolzen (23) befestigt ist.

13. Vorrichtung nach einem der vorhergehenden Ansprüche, dadurch gekennzeichnet, daß wenigstens eine der Öffnungen (4a oder 4b) nahe ihrem inneren Ende verbreitert ist.

14. Vorrichtung nach einem der Ansprüche 1 bis 13, dadurch gekennzeichnet, daß die eine der Öffnungen (4a) die Form eines kreisförmigen Segmentes aufweist und an ihrem äußeren Ende in einen Abschnitt (4'a) mit konstanter Breite mündet oder auch die Form eines abgestumpften kreisförmigen Sektors aufweist.

15. Vorrichtung nach einem der Ansprüche 1 bis 14, dadurch gekennzeichnet, daß die beiden Öffnungen (4a und 4b) relativ zueinander über ihre ganze Länge oder über einen Teil davon in bezug auf eine Achse versetzt sind, die parallel zur Richtung der relativen Bewegung der beiden dicken Teile verläuft.

16. Vorrichtung nach einem der Ansprüche 1 bis 15, dadurch gekennzeichnet, daß die beiden Öffnungen (4a und 4b) unterschiedliche Formen aufweisen.

17. Vorrichtung nach einem der Ansprüche 1 bis 16, dadurch gekennzeichnet, daß an der Wand (2) ausgehend vom Boden wenigstens einer der Öffnungen (4a und 4b) Einkerbungen (25) angebracht sind.

18. Vorrichtung nach einem der Ansprüche 1 bis 17, dadurch gekennzeichnet, daß der Winkel C oder D des Bodens wenigstens einer der Öffnungen (4a und 4b), der während der Beanspruchung des Bauteils einer Zugspannung ausgesetzt ist, stumpf wird, während der andere Winkel A oder B, der eine Druckbeanspruchung ausgesetzt ist, rechtwinkelig oder spitz wird.

19. Vorrichtung nach einem der Ansprüche 1 bis 18, dadurch gekennzeichnet, daß der Boden wenigstens einer der Öffnungen (4a und 4b) einen Haken (27a oder 27b) trägt, welcher von der Ebene der Wand nach außen gerichtet ist und an dem eines der Enden einer Feder (28a oder 28b) befestigt ist, während ihr anderes Ende an der Wand oder am Bauteil festgelegt ist, dessen Ermüdung angezeigt werden soll.

20. Vorrichtung nach Anspruch 19, dadurch gekennzeichnet, daß der Haken (27a oder 27b) eine Schulter (30) aufweist, die ein Widerlager für die Feder darstellt und ihre Lage in bezug auf die Ebene der Wand bestimmt.

21. Vorrichtung nach einem der Ansprüche 1 bis 20, dadurch gekennzeichnet, daß, wenn das zu prüfende Bauteil einen Bereich aufweist, der einem ziemliche gleichförmigen und einachsigen Feld von Einschnürungen ausgesetzt ist, die beiden dicken Teile der Vorrichtung zur Anzeige von Materialermüdung an der Oberfläche des Bauteiles in einer Richtung befestigt sind, die zur Richtung der Haupteinschnürung in einem Winkel von 25° bis 35° verläuft.

22. Vorrichtung nach Anspruch 17, dadurch gekennzeichnet, daß die Stirnfläche (25a) der Einkerbungen abgefast ist und zur Ebene der Wand eine Neigung aufweist.

## Claims

1. Fatigue indicator for mechanical piece subjected to repeated stresses, comprising two thick elements (1a and 1b), which are spaced apart from each other and connected to each other by a thin web (2) provided with two free, opposite edges and with two slots (4a and 4b) each extending from one edge over a certain distance in order each to constitute a slot bottom forming points of incipient cracks, these two elements being incorporated in the piece or fixed thereto so as to move one with respect to the other in a plane which is parallel to the plane of the web, characterized in that the thick elements (1a and 1b) are disposed so as to be spaced apart from each other in a direction substantially perpendicular to their direction of relative displacement when the piece is working, the thin web (2) thus being subjected to a shear stress in its plane, and in that the slots (4a and 4b) of the thin web (2) extend in said direction of relative displacement, so that, when the piece is working, two cracks (9) appear from the ends of the bottom of each of the slots, extend progressively in the web and finish by joining, the central zone (5) of the web (2) thus being detached.

2. Indicator according to Claim 1, characterized in that the two thick elements (1a and 1b) and the web (2) constitute the same piece which is pierced with a blind hole (3) on each of its two opposite lateral faces, the two holes (3) being coaxial so that their bottoms are separated by the web (2), and having dimensions such that this web is the only element of connection between the two non-recessed parts of the piece.

3. Indicator according to Claim 1 or 2, characterized in that the web (2) is circular, possibly provided with a hole (11) at its centre.

4. Indicator according to one of Claims 1 to 3, characterized in that the slots (4a and 4b) are opposite each other in the direction of relative displacement of the two thick elements.

5. Indicator according to any one of the preceding claims, characterized in that the bottom (10) of at least one of the slots is flat.

6. Indicator according to any one of Claims 1 to 4, characterized in that the bottom (10) of at least one of the slots is convex.

7. Indicator according to any one of the preceding claims, characterized in that the web (2) is convex.

8. Indicator according to any one of the preceding claims, characterized in that a machining fillet connects the web (2) to the thick parts (1a and 1b).

9. Indicator according to any one of the preceding claims, characterized in that the web (2) of variable thickness, is thicker at its centre.

10. Indicator according to any one of the preceding claims, characterized in that additional cut-outs (15 or 16) are made in the web (2) to guide the cracks, these cut-outs being for example circular or rectangular.

11. Fatigue indicator according to one of Claims 1 to 10, characterized in that grooves (21a-21b) are formed, on at least one face of the web (2), from the ends of the bottom of at least one of the slots (4a and 4b).

12. Indicator according to one of Claims 1 to 11, characterized in that the web (2') is independent of the solid elements (1a or 1b) to which it is fixed for example by screws or bolts (23).

13. Fatigue indicator according to one of the preceding claims, characterized in that at least one of the slots (4a or 4b) is widened in the vicinity of its inner end.

14. Fatigue indicator according to one of Claims 1 to 13, characterized in that one of the slots (4a) has the form of a segment of circle and opens to the outside by a part (4'a) of constant width, or has the form of a truncated circular sector.

15. Fatigue indicator according to one of Claims 1 to 14, characterized in that the two slots (4a and 4b) are offset with respect to each other, over all or part of their length with respect to an axis parallel to the direction of relative displacement of the two thick elements.

16. Fatigue indicator according to one of Claims 1 to 15, characterized in that the two slots (4a and 4b) are of different shape.

17. Fatigue indicator according to one of Claims 1 to 16, characterized in that notches (25) are made in the web (2), from the bottom of at least one of the slots (4a and 4b).

18. Fatigue indicator according to one of Claims 1 to 17, characterized in that the angle C or D of the bottom of at least one of the slots (4a and 4b) which is subjected to a tension when the piece is working, is obtuse, whilst the other angle A or B which is subjected to a compression is right or acute.

19. Fatigue indicator according to one of Claims 1 to 18, characterized in that the bottom of at least one of the slots (4a and 4b) bears a tab (27a or 27b) raised outside the plane of the web and to which is hooked one of the ends of a spring (28a or 28b) having its other end fixed to the web or to the piece of which the fatigue is to be monitored.

20. Fatigue indicator according to Claim 19, characterized in that the tab (27a or 27b) bears a shoulder (30) forming stop for the spring and determining its position with respect to the plane of the web.

21. Fatigue indicator according to one of Claims 1 to 20, characterized in that, when the piece to be monitored presents a zone subjected to a substantially uniform and uni-axial field of stresses, the two thick elements of the fatigue indicator are fixed to the surface of the piece in a direction making an angle of 25° to 35° with the direction of the main stress.

22. Fatigue indicator according to Claim 17, characterized in that the front side (25a) of the notches is bevelled and inclined with respect to the plane of the web.

## Fig.1

## Fig.2

## Fig. 3

## Fig.4

Fig. 5

Fig. 6

Fig. 7

Fig. 8

Fig.9

Fig. 11

Fig. 10

Fig. 12

Fig. 13

## Fig. 14

1a  2  5  4a  10  4b  1b

## Fig. 15

1a  2  5  4a  4b  10  1b

## Fig. 16

1a  2  21a  XVII  XVII  21b  4a  10  5  4b  21a  21b  1b

## Fig. 18

1a  2  21a  21b  4a  10  5  4b  21a  21b  1b

## Fig. 17

21a  2  21b

## Fig. 19

4'a  4a  4b

Fig.20

Fig.22

Fig.21

Fig.23

FIG. 25

FIG. 28

FIG. 24

FIG. 27

FIG. 26

FIG. 30

FIG. 29